# EUROPEAN PATENT SPECIFICATION

(11) **EP 0 574 365 B1**
(45) Date of publication and mention of the grant of the patent: **31.01.1996**
(21) Application number: 93830250.2
(22) Date of filing: 07.06.1993
(51) Int. Cl.: F16H 35/10

(54) **An axial stress limiter safety device**
Sicherungseinrichtung zur Axialkraftbegrenzung
Dispositif de sécurité pour limiter la force axiale

(30) Priority: 08.06.1992 IT BO920231
(43) Date of publication of application: 15.12.1993
(73) Proprietor: O.M.C. S.n.c. di DANTE CAVALLI & C., I-40055 Villanova di Castenaso (Bologna) (IT)
(72) Inventor: Cavalli, Dante, I-40055 Villanova di Castenaso (Bologna) (IT)
(74) Representative: Lanzoni, Luciano

(56) References cited:
- EP-A- 0 010 113
- DE-C- 3 611 617
- GB-A- 955 055

## Description

The invention relates to the technical field of safety devices, that is all those mechanical organs guaranteeing a kinematic disengagement between the drive shaft and the driven shaft whenever faults determine an excessive and uncalculated increase in the reaction forces on the driven shaft, and in particular the invention concerns an axial stress limiter safety device as specified in the preamble of claim 1, for example as disclosed in the document DE-C-3 611 617. In general stress-limiters consist of a mechanical element, inserted between a drive organ and a driven organ with the task of preventing transmission from one to the other of stress above a certain, predetermined limit.

For example, protection against rotational overloads is generally provided by using devices with couple limiters acting on the rotating parts. Usually the limiter is constituted by two coaxial bodies which are made solid to each other, for kinematic reasons, by a plurality of rollers or spheres which function as a frontal cogging and which couple with a series of seatings, also frontal, or through a high-friction couple. The enmeshing of the joints is guaranteed by springs or the like which transmit an axial thrust to one of the two bodies, which thrust entity also determines the transmittable couple to the joint itself.

With couple limiters, however, axial forces are not under control and motors using such devices are not protected from excessive stresses of this kind.

An axial safety device, produced by the Mayr Kupplungen Company, is constituted by a metallic sleeve keyed on to a pivot, which sleeve is associated at one of its ends to the drive organ and exhibits a transversally-arranged throat. The opposite end of the sleeve to the end where the pivot it is keyed on to runs through is associated to the driven organ.

On the said throat a ring acts, which ring is constituted by several segments and has a transversal section that is substantially a triangle with its base in contact with the throat and which is of equal dimensions to the width of the throat, so as to constitute an arrest for the said pivot.

The ring is held in position by two special thrust washers, which frontal surfaces, turned towards the segments and inclined conrrespondingly to the surfaces of the segments which which they interact, extend transversally to the pivot axis. The said thrust washers are axially loaded by Belleville washers and prevent axial movement of the pivot with respect to the sleeve, transmitting the forces applied by the drive organ to the driven organ. In case of overloading, the force acting on the safety element is such as to exceed the reaction of the springs and shove out the segmented ring from the throat, with a consequent disconnection between the drive organ and the driven organ.

Following a return to normal conditions, the ring, there no longer being forces which are superior to the elastic reaction of the spring, repositions so as to constitute an arrest for the pivot and thus reconstitutes the connection between the drive organs and the driven organs.

A drawback of the above solution derives from the excessive complexity of the element wherein there are numerous and relevant frictions, due to the large number of parts in movement and also due to the fact that they act on different inclined planes.

This complexity can be noticed both during the manufacturing phase, thanks to the difficult positioning in the throat of the segments constituting the ring, and during the phase of use of the safety element, thanks to the wear which can derive from the said frictions.

Furthermore, the segment ring constituting an arrest moves exclusively on a perpendicular plane to the axis and thus suffers considerably from the transmission reactions of rectilinear reciprocating motion.

The aim of the present invention in thus to eliminate the above-mentioned drawbacks.

To this end, an axial stress limiter safety device in accordance with the present invention is characterized by the features specified in the characterizing part of claim 1.

The characteristics and advantages of the present invention will better emerge from the detailed description that follows, of an embodiment of the invention, herein illustrated purely in the form of a non-limiting example in the accompanying figures, in which:

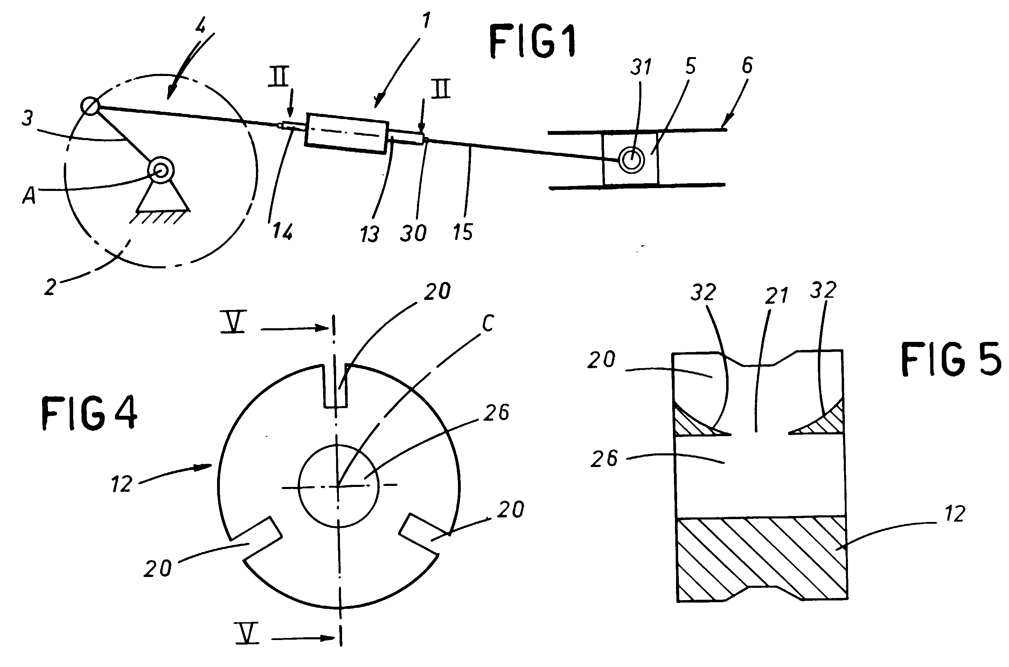

- figure 1 shows a theoretical design relating to a positioning example of an axial-thrust limiter device on a part of a machine to be protected from rectilinear movement overloads;
- figure 2 shows the device according to a longitudinal section along line II-II of figure 1, in an engaged position;
- figure 3 shows the same device in unengaged position;
- figure 4 shows a detail of the device (the part called a sleeve) in a frontal view;
- figure 5 shows the detail of figure 4 in section along line V-V of figure 4.

With reference to the accompanying figures, an axial-thrust limiter device 1 is associated, in a possible embodiment, to a portion of a connecting rod 4 or other like mechanical organ in reciprocating motion driven by an organ such as for example a sleeve 3 associated to a flywheel 2 rotatable about an axis A. The rotating movement of the flywheel 2 is transformed, through the con rod-sleeve complex, into reciprocating motion which rectilinearly moves a slider 5 slidable between two fixed guides 6.

The device 1 is constituted by a cylindrical tubular body 7 axially holed at its closed end, keyed rotatably about a shaft 14 associated to the connecting rod 4 and exhibiting its other end closed by a stopper 8 which last is also axially holed; the said stopper 8 is associated to or is part of an internally hollow cylindrical chamber 13 constituting a special seating for the free end 14a of the shaft 14 which, at the opposite end 14b is associated to the connecting rod 4; this connection is realised thruogh a pair of bilateral eyelets 30 one of which connects the cylindrical chamber 13 to an end of a rod 15 (constituting in fact the connecting rod 4) while the other end is connected by means of a chain 31 to the slider 5 of the kinematism.

The stopper 8 is made solid to the body 7 by a thread 16; unscrewing between the stopper 8 and the cylindrical tubular body 7 is prevented by pivots 17 which, parallel to the connecting rod 4 and exhibiting threads, are screwed between special seatings 18 present on the stopper 8 and seatings 19 present on the cylindrical tubular body 7.

The shaft 14 exhibits a transversally-arranged throat 11.

Internally to the cylindrical tubular body 7 is coaxially and rotatably keyed a substantially-cylindrical drum 12, axially holed and grooved over all of its length by a plurality of channels 20, which are angularly equidistanced about the theoretical axis C of the drum 12. The channels 20 have, on their side turned towards the axis of the drum 12, a surface which is substantially semicircular 32, interrupted more or less in the median position by a through-split 21, for the containing of a series of cam couples 22 and 24 which couple with the said shaft 14. The said cams exhibit a substantially equal but slightly less breadth than the channels 20 so that the cams can freely house and slide inside the channels 20 without excessive friction or play.

The two cams exhibit, in the portions facing each other, surfaces which are complementarily associable and enable two elements to be kinematically connected with freedom to rotate about a theoretical axis B, assuming configurations with differing longitudinal developments along axis C. The cam 22 exhibits, in the part of it closest to the axis C of the drum 12, a prolongation 25 conformed in such a way as to pass through the through-splits 21 and be received by the throat 11, thus constituting an arrest to axial sliding of the shaft 14 with respect to the cylindrical tubular body 7 of the device 1.

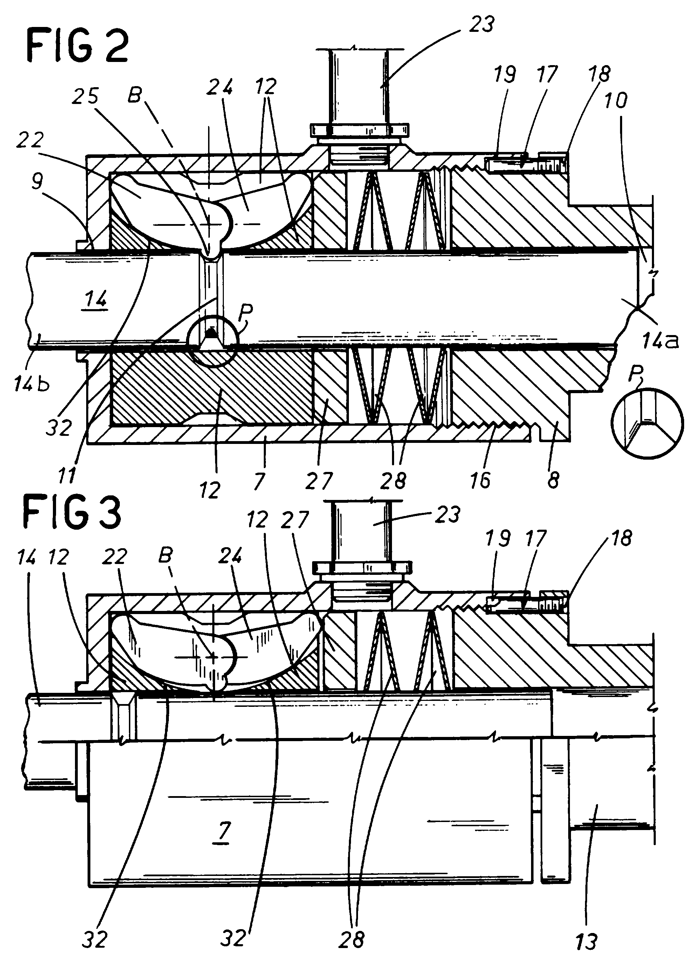

In the configuration illustrated in figure 2, exhibited by the two cams when the prolongation 25 of the cam 22 is acting as an arrest for the connecting rod 4, the longitudinal development of the totality constituted by the two elements is equal to that of the drum 12; when the prolongation 25, as illustrated in figure 3, is not positioned in the throat 11, the said longitudinal development of the totality of the two elements is greater and at least one of the ends exits from the channels 20 at the bases of the drum 12.

Also present on the connecting rod 4, in the portion between the said drum 12 and the stopper 8 and keyed coaxially and rotatably to the connecting rod 4 is a spacer element 27 constituted by a ring and elastic means 28 constituted by one or more Belleville washers (or by a helix spring); the spacer element 27 is interpositioned between the drum 12 and the elastic means 28. The said elastic means 28 act between the stopper 8 and the spacer element or ring 27 and are set in such a way as to press the ring 27, causing it to adhere to the drum 12. The ring 27, adhering to the drum 12, interacts with the ends of the cam elements 24 in the end part of the channels 20 present on the base of the drum 12.

In the presence of axial stress applied along the connecting rod 4 below a certain pre-established limit, the ring 27, pushed by the elastic means 28 interacts with the end of one of the cam elements 24, causing the totality of the cam elements to assume a contracted configuration in which the prolongation 25 present on the cam 22 is stably received internally to the throat 11.

When, on the contrary, the motion transmission places the connecting rod 4 and therefore the shaft 14 under axial stress which is greater than the said pre-established limit, variable accoriding to the number of elastic means 28 present and their coefficient of elasticity, the prolongation 25 is distanced from the throat 11 in a radial direction, the cams 22 and 24 are subjected to a stretching and the elastic means 28 are compressed with a consequent reduction of the longitudinal space occupied by them; consequently to the said reduction, the spacer element 27 moves along the con rod in the direction of the stopper 8 up until it assumes a configuration illustrated in figure 3, in which the shaft 14 is axially independent of the body 7 and thus also of the driven shaft 15.

Once the stress returns to normal values, lower than those of the setting, the elastic means 28 push the ring 27 up until it newly kisses the drum 12 and there is an automatic reengaging of the prolongation 25 in its initial stable position in which the thrust between sleeve and cursor is guaranteed. Means 23 are also envisaged which can be either of mechanical type or electronic type, for the reading and signalling of a movement inside the safety element and the consequent interruption of the transmission.

The dimensions of the stopper 8 are calculated so that, even when it is screwed tightly into the cylindrical tubular body 7, it does not create an excessive compression of the elastic means 28 which would no longer permit the stretching of the cam 22 and 24. Further, in a special further embodiment, the inclination of the throat 11 will, in the two opposite tracts, be differentiated so as to define two different intervention values of the limiter device, one for the compression phase on another for the connecting rod 4 traction phase (see detail P of figure 2).

## Claims

1. An axial stress limiter safety device (1) constituted by an axially-holed hollow cylindrical tubular body (7) keyed slidably on a transmission shaft (14) of rectilinear reciprocating motion, equipped with a perimetral throat (11), the said cylindrical tubular body (7) exhibiting internally thrust transmission means (22, 24) acting between the said shaft (14) and an end of elastic means (28) freely keyed on the said shaft (14) and contained internally to the said hollow body (7) by a closing element (8) acting on an opposite end of the said elastic means (28), **characterised in that** the said thrust transmission means (22, 24) are constituted by at least one couple of cams (22, 24) kinematically connected to each other, and arranged internally to at least one channel (20) made longitudinally on the external surface of a support drum (12) freely coaxially keyed on the said shaft (14) and arranged free inside the said hollow body (7), the said channel (20) exhibiting, in longitudinal section on on its face turned towards an axis of the drum (12), a surface which is substantially semi-circular (32), acting as a resting surface for the said cams (22, 24), said surface (32) being interrupted more or less at its median position by a through-split (21) for connection of the said cams (22, 24) to the said shaft (14).

2. A safety device as in claim 1, **characterised in that** the said cams (22, 24) exhibit a breadth which is substantially equal to, but slightly smaller than, the breadth of the said channel (20) and that the said cams (22, 24) are constrained to each other about a theoretical axis (B) which is transversal to said shaft (14), and that they assume compressed and stretched configurations with different longitudinal developments.

3. A safety device as in claim 1, **characterised in that** at least one (22) of the said cams (22, 24) exhibits in its closest part to an axis (C) of the drum (12) a prolongation (25) with a longitudinal development substantially equal to that of the said throat (11) and constituting, when inserted in said throat (11) and crossing said through-split (21) when the said cams (22, 24) are compressed, an arrest against axial sliding of the said hollow body (7) on said shaft (14).

4. A safety device as in claims 1 and 3, **characterised in that** the elastic reaction of the said elastic means (28) is directed towards an end of the said hollow body (7) which is opposite to the said stopper (8) and destined to cause the said elastic means (28) to interact with one (24) of said cams (22, 24) by pushing the said prolongation (25) of the other cam (22) into the said throat (11) of the motion transmission shaft (14).

5. A safety device, as in claim 1, **characterised in that** the said elastic means (28) are constituted by Belleville washers.

6. A device as in claim 1, **characterised in that** the said elastic means (28) are constituted by at least one helix spring.

7. A device as in claim 1, **characterised in that** the said channels (20) are more than one and are angularly equidistanced about an axis (C) of the drum (12).

8. A safety device, as in claim 4, **characterised in that** the said channels (20) are three in number and contain the cam couples (22, 24).

9. A safety device, as in claim 1, **characterised in that** reading and/or signalling means (23) of axial movement internally to the said hollow body (7) are associated or associable to the said hollow body (7).

10. A safety device, as in claim 1, **characterised in that** said stopper (8) defines a chamber (13) constituting a seating for a free end of said shaft (14), said chamber (13) being stably connected to a driven organ (15).

11. A safety device, as in claim 1, **characterised in that** said throat (11) exhibits opposite ends which are differentiated so as to define two differing intervention values of the safety device, one for the compression phase and one for a traction phase of the said connecting rod (4).

## Patentansprüche

1. Sicherheitseinrichtung zur Axialkraftbegrenzung (1), bestehend axial gebohrten rohrförmigen zylindrischen Hohlkörper (7), gleitbar aufgezogen auf eine Antriebswelle (14) mit geradliniger und wechselweiser Bewegung, die mit einer umlaufenden Rille (11) versehen ist, wobei der genannte zylindrische Hohlkörper (7) in seinem Inneren Schubübertragungsmittel (22, 24) aufweist, die zwischen der genannten Welle (14) und einem Ende von Federmitteln (28) wirken, die frei auf die genannte Welle (14) aufgezogen sind und im Inneren des genannten Hohlkörpers (7) gehalten werden, und zwar durch ein Verschlusselement (8), das auf das entgegengesetzte Ende der genannten Federmittel (28) wirkt, **dadurch gekennzeichnet**, dass die genannten Schubübertragungsmittel (22, 24) aus wenigstens einem Paar von Nocken (22, 24) gebildet werden, die kinematisch miteinander verbunden und im Inneren von wenigstens einer Auskehlung (20) angeordnet sind, eingearbeitet in Längsrichtung in die äussere Oberfläche einer Trägertrommel (12), die frei und koaxial auf die genannte Welle (14) aufgezogen und frei im Inneren des genannten Hohlkörpers (7) angeordnet ist, wobei die genannte Auskehlung (20) im Längsschnitt an seiner der Achse der Trommel (12) zugewandten Seite eine im wesentlichen halbkreisförmige Oberfläche (32) aufweist, die als Anschlagfläche für die genannten Nocken (22, 24) dient, und wobei die genannte Oberfläche (32) mehr oder weniger in ihrer Mittenposition von einem durchgehenden Schlitz (21) zur Verbindung der genannten Nocken (22, 24) mit der genannten Welle (14) unterbrochen wird.

2. Sicherheitseinrichtung nach Patentanspruch 1, **dadurch gekennzeichnet**, dass die genannten Nocken (22, 24) eine Breite aufweisen, die im wesentlichen gleich, doch leicht schmaler ist als die Breite der genannten Auskehlung (20), und dass die genannten Nocken (22, 24) miteinander um eine theoretische Achse (B) gezwungen sind, die quer zu der genannten Welle (14) verläuft, und dass sie zusammengedrückte und ausgedehnte Anordnungen einnehmen, und zwar mit unterschiedlichen Längsverläufen.

3. Sicherheitseinrichtung nach Patentanspruch 1, **dadurch gekennzeichnet**, dass wenigstens eine (22) der genannten Nocken (22, 24) an einem einer Achse (C) der Trommel (12) am nächsten gelegenen Teil eine Verlängerung (25) aufweist, und zwar mit einem Längsverlauf im wesentlichen gleich zu dem der genannten Rille (11), welche Verlängerung, wenn sie in die genannte Rille (11) eingesetzt ist und durch den genannten durchgehenden Schlitz (21) geht, sobald die genannten Nocken (22, 24) zusammengedrückt sind, eine Arretierung gegen das axiale Gleiten des genannten Hohlkörpers (7) auf der genannten Welle (14) bilden.

4. Sicherheitseinrichtung nach den Patentansprüchen 1 und 3, **dadurch gekennzeichnet**, dass die elastische Reaktion der genannten Federmittel (28) zu einem Ende des genannten Hohlkörpers (7) hin gerichtet ist, welches sich auf der entgegengesetzten Seite von dem genannten Verschluss (8) befindet und dazu bestimmt ist zu bewirken, dass die genannten Federmittel (28) mit einer (24) der genannten Nocken (22, 24) zusammenarbeiten, und zwar, und zwar durch das Schieben der genannten Verlängerung (25) der anderen Nocke (22) in die genannte Rille (11) der Bewegungsantriebswelle (14).

5. Sicherheitseinrichtung nach Patentanspruch 1, **dadurch gekennzeichnet**, dass die genannten Federmittel (28) aus Belleville-Federn bestehen.

6. Sicherheitseinrichtung nach Patentanspruch 1, **dadurch gekennzeichnet**, dass die genannten Federmittel (28) aus wenigstens einer Schneckenfeder bestehen.

7. Sicherheitseinrichtung nach Patentanspruch 1, **dadurch gekennzeichnet**, dass die genannten Auskehlungen (20) mehr als ei ne sind und sich winkelmässig in einem gleichmässigen Abstand voneinander um eine Achse (C) der Trommel (12) angeordnet befinden.

8. Sicherheitseinrichtung nach Patentanspruch 4, **dadurch gekennzeichnet**, dass die genannten Auskehlungen (20) drei in der Zahl sind und die Nockenpaare (22, 24) aufnehmen.

9. Sicherheitseinrichtung nach Patentanspruch 1, **dadurch gekennzeichnet**, dass dem genannten Hohlkörper (7) Ablese- und/oder Anzeigemittel (23) der axialen Bewegung im Inneren des genannten Hohlkörpers (7) zugeordnet oder zuzuordnen sind.

10. Sicherheitseinrichtung nach Patentanspruch 1, **dadurch gekennzeichnet**, dass der genannte Verschluss (8) eine Kammer (13) beschreibt, die einen Sitz für ein freies Ende der genannten Welle (14) bildet, wobei die genannte Kammer (13) stabil mit einem angetriebenen Element (15) verbunden ist.

11. Sicherheitseinrichtung nach Patentanspruch 1, **dadurch gekennzeichnet**, dass die genannte Rille (11) entgegengesetzte Abschnitte aufweist, die auf solche Weise differenziert sind, dass sie zwei unterschiedliche Eingriffswerte der Sicherheitseinrichtung bilden, und zwar einen für die Druckphase und einen für die Zugphase der genannten Verbindungsstange (4).

## Revendications

1. Un dispositif de sécurité pour limiter la force axiale (1), constituée d'un corps tubulaire cylindrique creux (7), percé axialement, claveté et coulissant sur une tige de transmission (14) à mouvement rectiligne alternatif, équipé d'une gorge externe (11), le dit corps tubulaire (7) présentant à l'intérieur des éléments de transmission de poussée (22, 24) qui agissent entre la dite tige (14) et une extrémité de parties élastiques (28) librement clavetées sur la dite tige (14) et contenues à l'intérieur du dit corps creux (7) par un élément de fermeture (8) agissant sur une extrémité opposée des dit éléments élastiques (28) , caractérisé par le fait que les dits éléments de transmission de poussées (22, 24) sont constitués d'un couple de cames (22, 24) cinématiquement connectés l'une à l'autre et disposées à l'intérieur d'au moins une rainure (20) présentant, en coupe longitudinale et sur la face tournée vers le tambour (12) une surface substantiellement semi-circulaire (32) de support pour les dites cames, interrompue presque en position médiane par une fente passante (21) pour la connexion des dites cames (22, 24) à la dite tige (14).

2. Un dispositif de sécurité comme dans la revendication 1, caractérisé par le fait que les dites cames (22, 24) présentent une épaisseur substantiellement égale ou légèrement inférieure à l'épaisseur de la dite rainure (20) et que les dites cames (22 et 24) sont liées l'une à l'autre par un axe théorique (B) transversal à la dite tige (14), et qu'ils assument des configurations comprimées et étirées présentant des développements longitudinaux différents.

3. Un dispositif de sécurité comme dans la revendication 1, caractérisé par le fait que l'une (22) des dites cames (22, 24) présente dans sa partie la plus proche d'un axe (C) du tambour (12) un prolongement (25) dont le développement longitudinal est substantiellement égal à celui de la dite gorge (11) et constituant un arrêt au glissement axial du dit corps creux (7) sur la dite tige (14), lorsque ce dernier est inséré dans la dite gorge (11) et traverse la dite fente passante (21) lors de la compression des dites cames (22, 24).

4. Un dispositif de sécurité comme dans la revendication 1 et 3, caractérisé par le fait que la réaction élastique des dites parties élastiques (28) est dirigée vers une extrémité du dit corps creux (7) qui est opposé au dit bouchon (8) de telle sorte que les parties élastiques (28) aient une action réciproque avec l'une (24) des dites cames (22, 24) en poussant le dit prolongement (25) de l'autre came (22) dans la dite gorge (11) du manchon de transmission du mouvement (14).

5. Un dispositif de sécurité comme dans la revendication 1, caractérisé par le fait que les dites parties élastiques (28) sont constituées de ressorts à godet.

6. Un dispositif de sécurité comme dans la revendication 1, caractérisé par le fait que les dites parties élastiques (28) sont constituées d'au moins un ressort hélicoïdal.

7. Un dispositif de sécurité comme dans la revendication 1, caractérisé par le fait que les dites rainures (20) sont numériquement supérieures à un et qu'elles sont disposées de manières équidistantes en angle autour d'un axe (C) du tambour (12).

8. Un dispositif de sécurité comme dans la revendication 4, caractérisé par le fait que les dites rainures (20) sont au nombre de trois et contiennent trois couples de cames.

9. Un dispositif de sécurité comme dans la revendication 1, caractérisé par le fait que les parties (23) de mesure et/ou signalisation du déplacement axial à l'intérieur du dit corps (7) sont associées ou associables au dit corps creux (7).

10. Un dispositif de sécurité comme dans la revendication 1, caractérisé par le fait que le dit bouchon (8) définit une chambre (13) , constituant une assiette pour une extrémité libre de la dite tige (14), la dite chambre étant reliée de manière stable à l'organe entraîné (13).

11. Un dispositif de sécurité comme dans la revendication 1, caractérisé par le fait que la dite gorge (11) présente des extrémités opposées qui sont différenciées de manière à définir deux valeurs d'intervention différentes du dispositif limiteur, une pour la phase de compression et une autre pour la phase de traction de la bielle de connexion 4.1.
